# FASCICULE DE BREVET EUROPEEN

(11) **EP 4 267 706 B1**
(45) Date de publication et mention de la délivrance du brevet: **17.06.2026**
(21) Numéro de dépôt: 21848013.5
(22) Date de dépôt: 22.12.2021
(51) Int. Cl.: C10L 1/14, C10L 1/196, C10L 1/197, C10L 1/238, C10L 10/00, C10L 10/04, C10L 10/14, C10L 10/16, C09K 8/524, C10G 75/04, C10L 1/16

(54) **COMPOSITION D'ADDITIFS COMPRENANT UN COPOLYMÈRE ET UNE RÉSINE**
ZUSAMMENSETZUNG VON ADDITIVEN, DIE EIN COPOLYMER UND EIN HARZ ENTHALTEN
COMPOSITION OF ADDITIVES COMPRISING A COPOLYMER AND A RESIN

(30) Priorité: 22.12.2020 FR 2013911
(43) Date de publication de la demande: 01.11.2023
(73) Titulaire: TOTALENERGIES ONETECH, 92400 Courbevoie (FR)
(72) Inventeur: TORT, Frederic, 69700 Givors (FR); FRITSCH, Thomas, 69700 Givors (FR)
(74) Mandataire: Casalonga
(86) Numéro de dépôt international: PCT/FR2021/052426
(87) Numéro de publication internationale: WO 2022/136801

(56) Documents cités:
- WO-A1-2012/085865
- WO-A1-2013/189868
- WO-A1-2014/173844
- WO-A1-2016/162392

## Description

### Domaine technique

La présente invention concerne une composition d'additifs comprenant au moins un premier composé choisi parmi les copolymères d'éthylène et d'acétate de vinyle (EVA), optionnellement greffés par au moins un (méth)acrylate d'alkyle ou parmi les polymères comprenant au moins 90% en moles de motifs issus de monomère (méth)acrylate d'alkyle; et au moins un second composé choisi parmi les résines alkylphénol-aldéhyde modifiées par une alkylpolyamine.

L'invention concerne également l'utilisation de cette composition pour diminuer la viscosité d'un produit pétrolier liquide et/ou pour limiter la formation des dépôts de paraffines sur les parois d'une conduite de transport d'un produit pétrolier liquide (pipe).

L'invention concerne en outre un procédé de diminution de la viscosité d'un produit pétrolier liquide et/ou de limitation des phénomènes d'agrégation des paraffines, et/ou de dispersion des paraffines et/ou de retardement de la cristallisation des paraffines, dans un produit pétrolier liquide.

### Etat de la technique antérieure

Les formations souterraines de pétrole brut, également couramment dénommé « huile minérale brute » ou « huile brute » ont des températures relativement élevées. Après son extraction de la formation souterraine vers la surface, l'huile brute se refroidit. Son refroidissement varie en fonction de la température de production et des conditions de stockage ou de transport.

L'huile brute extraite comprend principalement deux classes de produits : les maltènes et les asphaltènes. Les maltènes ont pour principaux constituants des résines et des cires Ces dites cires sont constituées de paraffines (des composés hydrocarbonés saturés) et d'aromatiques. Les paraffines sont constituées d'alcanes linéaires ou ramifiés et peuvent être liquides, huileuses ou solides.

Selon leur origine, les huiles brutes ont différentes proportions de cires, qui sont essentiellement constituées de n-paraffines à longue chaîne. Selon le type de pétrole brut, la proportion de ces paraffines peut typiquement être de 1 à 30% en poids du pétrole brut.

Lors de l'extraction de l'huile brute d'un puits, lors de chutes de températures, par exemple si le puits est sous-marin ou dans des conditions climatiques sévères, l'huile brute extraite se refroidit : il en résulte que les paraffines cristallisent, typiquement sous forme de plaquettes ou d'agrégats de plaquettes et que la viscosité (dynamique) de l'huile augmente. Les cristaux de n-paraffines en forme de plaquettes peuvent former une sorte de structure de château de cartes qui renferme le pétrole brut, de telle sorte que le pétrole brut cesse de couler, même si la partie prédominante est encore liquide. Les paraffines cristallisées, et donc l'huile brute très visqueuse, peuvent bloquer les filtres, les pompes, les canalisations/pipelines, boucher le puits, et autres installations ou être déposées dans des réservoirs, impliquant ainsi un haut niveau de nettoyage. La cristallisation de ces paraffines et donc l'augmentation de la viscosité peuvent survenir dans les puits de production de pétrole et dans les installations de pompage. Ces paraffines cristallisées nuisent considérablement à la fluidité de l'huile, elles augmentent sa viscosité et rendent les opérations de pompage et de transport de celle-ci plus difficiles, et plus onéreuses notamment car elles nécessitent plus d'énergie.

Ce phénomène entraîne également une perte de productivité et une diminution de la durée de vie du puits. Sans traitement permettant d'éviter ce phénomène, il est nécessaire de démonter fréquemment les installations de forage afin de les nettoyer et la fréquence des opérations de maintenance des sites de production représente une charge économique importante.

Les principaux facteurs qui favorisent la cristallisation des paraffines, et donc l'augmentation de la viscosité de l'huile brute, sont la baisse de la température et une augmentation de la pression par rapport à la « pression initiale » lors de l'extraction de l'huile ou pendant le transport et/ou le stockage.

La température la plus basse à laquelle un échantillon d'huile s'écoule encore au cours de son refroidissement est appelée point d'écoulement (« pour point »). Pour la mesure du point d'écoulement, des méthodes d'essai normalisées sont utilisées.

Les huiles brutes peuvent avoir des points d'écoulement supérieurs à la température ambiante, de sorte que les huiles de ce type peuvent se solidifier au cours ou après la production. Le point d'écoulement des huiles brutes peut être abaissé par des additifs appropriés. Cela peut empêcher les paraffines de cristalliser au cours du refroidissement du pétrole brut produit. Des additifs appropriés empêchent tout d'abord la formation desdites structures de type château de cartes des paraffines et abaissent ainsi la température à laquelle le pétrole brut se solidifie. De plus, les additifs peuvent favoriser la formation de cristaux de paraffines fins, bien cristallisés et non agglomérants, de sorte qu'un transport d'huile ininterrompu est assuré. Ces additifs sont appelés abaisseurs de point d'écoulement (« pour point depressant » en anglais, ou PPD) ou améliorateurs de flux.

Pour éviter les problèmes de cristallisation des paraffines, à basse température notamment, une solution consiste à ajouter à l'huile brute des additifs, notamment des additifs modificateurs de la cristallisation permettant de modifier la morphologie et la taille des cristaux. Ces additifs peuvent aussi avoir un effet dispersant permettant de limiter les phénomènes d'agglomération des cristaux de paraffines. Des additifs connus sont des résines alkylphénol-aldéhyde modifiées, obtenues par réaction de Mannich d'une résine de condensation alkylphénol-aldéhyde avec au moins un aldéhyde et au moins un composé hydrocarboné ayant au moins un groupement alkylamine, pour disperser les asphaltènes et/ou pour prévenir et/ou retarder et/ou empêcher et/ou réduire la précipitation des asphaltènes dans des compositions d'huiles brutes (WO2016162392), ou dans des compositions de carburant comme additifs anti-sédimentation WASA (WO2012085865), pour la tenue aux basses températures (WO2013189868) et comme agents antioxydants (WO2014173844). Ces additifs sont ajoutés directement aux compositions de carburants pour en améliorer les propriétés. Dans les documents WO2012085865 et WO2013189868, l'effet technique décrit consiste à empêcher la formation et la cristallisation, ou la sédimentation, de cristaux de paraffines, en particulier aux basses températures.

Cependant, les additifs abaisseurs de point d'écoulement et les dispersants actuels ne permettent pas de cumuler un effet positif sur la rhéologie du brut (sa viscosité, sa contrainte de cisaillement) ainsi que sur les dépôts de paraffines et sur leur agrégation.

La demanderesse a ainsi découvert qu'une association particulière de deux additifs permettait d'abaisser le point d'écoulement et la viscosité des pétroles bruts de façon plus efficace que les additifs conventionnels, de limiter la formation de dépôts paraffiniques sur les parois ainsi que de limiter l'agrégation des paraffines.

### Résumé de l'invention

L'invention a pour premier objet une composition d'additifs comprenant :
(1) au moins un premier composé choisi parmi :
   (i) les copolymères d'éthylène et d'acétate de vinyle ayant une masse molaire Mn comprise dans la gamme allant de 10.000 à 60.000 g.mol⁻¹, optionnellement greffés par au moins un groupement (méth)acrylate d'alkyle dont la chaine alkyle est saturée et contient de 12 à 30 atomes de carbone ; et
   (ii) les polymères comprenant au moins 90% en moles de motifs issus de monomère (méth)acrylate d'alkyle dont la chaine alkyle est saturée et contient de 18 à 22 atomes de carbone ;
(2) au moins un second composé choisi parmi les résines alkylphénol-aldéhyde modifiées ; lesdites résines alkylphénol-aldéhyde modifiées étant susceptibles d'être obtenues par réaction de Mannich d'une résine de condensation alkylphénol-aldéhyde :
   - avec au moins un aldéhyde et/ou une cétone ayant de 1 à 8 atomes de carbone, et
   - au moins un composé hydrocarboné comprenant au moins un groupement alkylpolyamine ayant de 1 à 30 atomes de carbone ;
   ladite résine de condensation alkylphénol-aldéhyde étant elle-même susceptible d'être obtenue par condensation :
   - d'au moins un alkylphénol substitué par au moins un groupement alkyle, linéaire ou ramifié, ayant de 1 à 30 atomes de carbone, de préférence de 14 à 26 atomes de carbone, et encore plus préférentiellement ayant de 18 à 22 atomes de carbone ; avec
   - au moins un aldéhyde et/ou une cétone ayant de 1 à 8 atomes de carbone ; et
   dans laquelle le ratio massique de la quantité du premier composé (1) sur la quantité du second composé (2) est compris dans la gamme allant de 1 à 10, de préférence dans la gamme allant de 1 à 6, plus préférentiellement de 1 à 5, et encore mieux de 1,5 à 4.

L'invention a également pour objet l'utilisation de la composition d'additifs pour diminuer la viscosité dynamique d'un produit pétrolier liquide, de préférence à température inférieure ou égale à 30°C, plus préférentiellement inférieure ou égale 25°C, plus préférentiellement inférieure ou égale 20°C, plus préférentiellement inférieure ou égale 15°C, plus préférentiellement inférieure ou égale 10°C, plus préférentiellement inférieure ou égale 5°C, plus préférentiellement encore inférieure ou égale 0°C, mieux inférieure ou égale -5°C, et mieux encore inférieure ou égale à - 15°C; et/ou pour limiter les phénomènes d'agrégation des paraffines et/ou pour les disperser et/ou retarder leur cristallisation dans un produit pétrolier liquide ; et/ou pour abaisser le point d'écoulement d'un produit pétrolier liquide ; et/ou pour limiter la formation des dépôts de paraffines sur les parois d'une conduite de transport d'un produit pétrolier liquide (pipe).

De préférence, le produit pétrolier liquide est un gazole, un pétrole brut ou un fioul lourd, de préférence un pétrole brut.

Selon un mode de réalisation préféré de l'invention, les polymères (ii) comprennent au moins 95% en moles, de préférence au moins 98%, et mieux 100% de motifs issus de monomère (méth)acrylate d'alkyle dont la chaine alkyle est saturée et contient de 18 à 22 atomes de carbone.

Selon un mode de réalisation préféré de l'invention, la résine alkylphénol-aldéhyde modifiée est susceptible d'être obtenue à partir de p-nonylphénol, de formaldéhyde et d'au moins un composé hydrocarboné ayant au moins un groupement alkylpolyamine.

Selon un mode de réalisation préféré de l'invention, ladite résine alkylphénol-aldéhyde modifiée est susceptible d'être obtenue par réaction de Mannich d'une résine de condensation alkylphénol-aldéhyde :
- avec au moins un aldéhyde et/ou une cétone ayant de 1 à 4 atomes de carbone ; et
- et au moins un composé hydrocarboné comprenant au moins un groupement alkylpolyamine ayant de 4 à 30 atomes de carbone,
ladite résine de condensation alkylphénol-aldéhyde étant elle-même susceptible d'être obtenue par condensation :
- d'un monoalkylphénol avec
- au moins un aldéhyde et/ou une cétone ayant de 1 à 4 atomes de carbone.

Selon un mode de réalisation préféré de l'invention, la résine alkylphénol-aldéhyde modifiée est susceptible d'être obtenue à partir de p-nonylphénol, de formaldéhyde et d'au moins un composé hydrocarboné.

Selon un mode de réalisation préféré de l'invention, la résine alkylphénol-aldéhyde modifiée est susceptible d'être obtenue à partir de p-nonylphénol, et le nombre moyen de noyaux phénoliques par molécule de résine p-nonylphénol-aldéhyde modifiée est compris dans la gamme allant de 6 à 25, de préférence compris de 8 à 17, et encore plus préférentiellement de 9 à 16.

Selon un mode de réalisation préféré de l'invention, le composé hydrocarboné ayant au moins un groupement alkylpolyamine comprend au moins deux groupements amine primaire et une chaine grasse ayant de 12 à 24 atomes de carbone, de préférence de 12 à 22 atomes de carbone, et de préférence ledit composé hydrocarboné est la dipropylènetriamine de suif.

Selon un mode de réalisation préféré de l'invention, la composition d'additifs comprend en outre un solvant organique, de préférence choisi parmi un solvant aromatique, tel que le xylène ; une coupe d'hydrocarbures liquide telle qu'une coupe gazole ; et les mélanges de tels solvants.

Selon un mode de réalisation préféré de l'invention, le premier composé polymérique (1) comporte dans sa chaîne principale un nombre moyen de motifs acrylate ou de motifs éthylène par molécule de polymère compris dans la gamme allant de 5 à 30, de préférence de 8 à 25, et encore plus préférentiellement de 9 à 15.

Selon un mode de réalisation préféré de l'invention, la résine alkylphénol-aldéhyde modifiée est introduite dans la composition d'additifs (comprenant les additifs 1 et 2 et l'éventuel solvant) en une quantité comprise entre 100 et 20 000 ppm en poids, de préférence entre 1000 et 15 000 ppm, de préférence entre 2000 et 12 000 ppm, de préférence entre 3000 et 10 000 ppm, de préférence entre 4000 et 5000 ppm en poids par rapport au poids total de la composition.

Selon un autre mode de réalisation, l'invention concerne un procédé de diminution de la viscosité d'un produit pétrolier liquide et/ou de limitation des phénomènes d'agrégation des paraffines, et/ou de dispersion des paraffines et/ou de retardement de la cristallisation des paraffines, dans un produit pétrolier liquide, comprenant au moins les étapes suivantes :
- la préparation d'une composition d'additifs telle que définie ci-avant, puis
- l'introduction de ladite composition d'additifs dans un produit pétrolier liquide, de préférence un pétrole brut.

De préférence, la composition d'additifs est introduite dans le produit pétrolier liquide en une quantité telle que la teneur totale des deux composés (1) et (2) est comprise entre 10 et 2500 ppm en poids, de préférence entre 20 et 1800 ppm, de préférence entre 50 et 1500 ppm, de préférence entre 70 et 1000 ppm, de préférence entre 100 et 800 ppm, plus préférentiellement, de 400 à 700 ppm, plus préférentiellement de 550 à 650 ppm en poids.

Dans ce qui suit, et à moins d'une autre indication, les bornes d'un domaine de valeurs sont comprises dans ce domaine, notamment dans les expressions « compris entre » et « allant/va/s'étend de ... à ... ».

Par ailleurs, les expressions « au moins un » et « au moins » utilisées dans la présente description sont respectivement équivalentes aux expressions « un ou plusieurs » et « supérieur ou égal ».

Dans la présente invention, les masses molaires moyennes en nombre (Mₙ) et en masse (M_{w}), sont déterminées par chromatographie par perméation de gel ou chromatographie d'exclusion stérique (GPC en anglais pour « Gel Permeation Chromatography »).

### Description détaillée de l'invention

### Le premier composé

La composition selon l'invention comprend un premier composé (1) choisi parmi :
(i) les copolymères d'éthylène et d'acétate de vinyle ayant une masse molaire Mn comprise dans la gamme allant de 10.000 à 60.000 g.mol⁻¹, optionnellement greffés par au moins un (méth)acrylate d'alkyle dont la chaine alkyle est saturée et contient de 12 à 30 atomes de carbone ; et
(ii) les polymères comprenant au moins 90% en moles de motifs issus de monomère (méth)acrylate d'alkyle dont la chaine alkyle est saturée et contient de 18 à 22 atomes de carbone.

Dans un mode de réalisation préféré, les greffons (méth)acrylate d'alkyle des polymères (i) comportent une chaine alkyle saturée ayant de 14 à 26 atomes de carbone, et de préférence ayant de 18 à 22 atomes de carbone.

De préférence, les polymères (ii) comprennent au moins 95% en moles, de préférence au moins 98%, et mieux 100% de motifs issus desdits monomère (méth)acrylate d'alkyle.

### Le copolymère (i) non greffé

L'invention met en œuvre un copolymère comprenant un motif répétitif de formule (I) suivante :

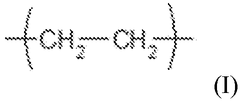

Ce motif est issu du monomère éthylène.

Il représente de préférence de 75 à 95% en moles, par rapport au nombre de moles total de motifs du copolymère.

De préférence, le copolymère comprend de 77 à 92% en moles de motifs de formule (I) par rapport au nombre de moles total de motifs du copolymère, plus préférentiellement de 80 à 88% en moles, et mieux encore de 82 à 87% en moles.

Le copolymère (i) comprend également un ou plusieurs motif(s) répétitif(s) d'acétate de vinyle répondant à la formule (II) suivante : 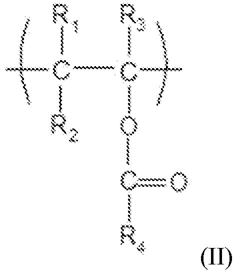 dans laquelle
R₁, R₂, et R₃, représentent un atome d'hydrogène, et R₄ représente un groupe alkyle en C₁.

Le ou les motifs de formule (II) représente(nt) de préférence de 5 à 25% en moles, par rapport au nombre de moles total de motifs du copolymère.

De préférence, le copolymère (i) comprend de 8 à 23% en moles de motifs de formule (II), plus préférentiellement de 12 à 20% en moles et mieux encore de 13 à 18% en moles.

Les motifs de formule (II) sont issus de monomères de l'ester d'acide carboxylique en C1 et d'alcools vinyliques, c'est-à-dire l'ester d'acétate de vinyle de formule (IIA) suivante : 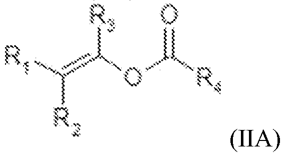 dans laquelle R₁, R₂, R₃ et R₄ sont tels que définis ci-avant.

Le copolymère (i) employé dans la présente invention est avantageusement un copolymère statistique.

La masse molaire Mn des copolymères (i) non greffés selon l'invention est comprise dans la gamme allant de 10.000 à 60.000 g.mol⁻¹, de préférence de 10.000 à 40.000 g.mol⁻¹, mieux de 10.000 à 20.000 g.mol⁻¹.

La masse molaire Mw des copolymères (i) non greffés selon l'inventionest de préférence comprise dans la gamme allant de 31.000 à 190.000 g.mol⁻¹, de préférence de 31.000 à 125000 g.mol⁻¹, mieux de 31.000 à 62.000 g.mol⁻¹.

Lorsqu'il n'est pas greffé, le copolymère (i) employé dans la présente invention contient uniquement des motifs de formule (I) et des motifs de formule (II).

Les copolymères (i) peuvent être préparés selon des procédés de polymérisation connus en soi. Les différentes techniques et conditions de polymérisation sont largement décrites dans la littérature et relèvent des connaissances générales de l'homme de l'art.

Ils peuvent notamment être synthétisés par polymérisation radicalaire classique comme décrit dans le document US3627838 : on procède généralement par mélange des différents monomères dans un solvant approprié, comme le benzène, et la copolymérisation est amorcée au moyen d'un agent amorceur de polymérisation radicalaire, comme un peroxyde tel que l'hydroperoxyde de tert-butyle. La température de réaction de copolymérisation s'effectue de préférence entre 260 et 350°C, de manière encore plus préférée 300°C et la pression est de préférence de 10 bars à 140 bars, de préférence de 40 bars à 70 bars.

Dans le cas où le copolymère est préparé par polymérisation radicalaire classique, il peut être nécessaire de procéder après la polymérisation proprement dite à une purification par toute technique de séparation appropriée (notamment par chromatographie) de manière à isoler un copolymère ayant les caractéristiques requises en termes de masse molaire et de dispersité.

Selon un mode de réalisation préféré, le copolymère selon l'invention est préparé en utilisant les techniques polymérisations radicalaires contrôlées (PRC). Les techniques de polymérisation radicalaire contrôlée, connues en soi, présentent l'avantage de pouvoir conduire directement à des copolymères ayant les caractéristiques de masse molaire et de dispersité requises, de telle sorte qu'une purification séparative peut, selon les conditions utilisées, ne pas être nécessaire.

Parmi ces techniques, on peut citer notamment les polymérisations gouvernées par terminaison réversible ou par transfert réversible (ou transfert dégénératif, en anglais « degenerative transfer »). Parmi ces techniques PRC, celles contrôlées par transfert dégénératif sont préférées et parmi celles-ci la polymérisation radicalaire par transfert de chaîne réversible par addition-fragmentation (RAFT en anglais « Reversible Addition-Fragmentation Chain Transfer ») est encore plus préférée.

### Le copolymère (i) greffé

Dans un autre mode de réalisation, le copolymère (i) employé dans la présente invention est greffé par au moins un (méth)acrylate d'alkyle dont la chaine alkyle est saturée et contient de 12 à 30 atomes de carbone.

Dans ce mode de réalisation, le copolymère (i) comprend un squelette de base constitué du copolymère (i) non greffé tel que décrit ci-avant, sur lequel sont greffés au moins un (méth)acrylate d'alkyle dont la chaine alkyle est saturée et contient de 12 à 30 atomes de carbone. Un tel greffon répond typiquement à la formule (III) suivante : 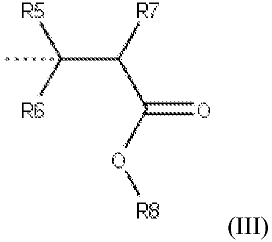 dans laquelle
R₅, R₆ identiques ou différents, représentent un atome d'hydrogène ou un groupe alkyle en C₁ à C₄ ; R₇ représente un atome d'hydrogène ou un groupe méthyle et R₈ représente une chaine alkyle saturée en C₁₂ à C₃₀.

Dans un mode de réalisation préféré, le ou les greffon(s) (méth)acrylate d'alkyle comportent au moins une chaine alkyle saturée ayant 14 à 26 atomes de carbone, et de préférence ayant de 18 à 22 atomes de carbone.

Selon un mode de réalisation préféré, R5, R₆, et R_{7,} identiques ou différents, représentent un atome d'hydrogène ou un groupe méthyle. De manière particulièrement préférée, R₅, R₆ et R₇ représentent tous un atome d'hydrogène ; ou R₅, R₆ représentent un atome d'hydrogène et R₇ représente un groupe méthyle.

Selon un mode de réalisation également préféré, R₈ représente une chaine alkyle saturée linéaire. Plus préférentiellement, R₈ est choisi parmi les groupes n-C₁₈H₃₇, n-C₁₉H₃₉ n-C₂₀H₄₁, n-C₂₁H₄₃, et n-C₂₂H₄₅.

Selon un mode de réalisation particulièrement préféré :
- R₅, R₆, et R₇ représentent tous un atome d'hydrogène, et
- R₈ est choisi parmi les groupes n-C₁₈H₃₇, n-C₁₉H₃₉ n-C₂₀H₄₁, n-C₂₁H₄₃, et n-C₂₂H₄₅.

De manière très préférée, R₈ est choisi parmi un mélange des groupes n-C₁₈H₃₇, n-C₂₀H₄₁, et n-C₂₂H₄₅, c'est-à-dire que le (méth)acrylate d'alkyle est l'acrylate de béhényle.

Le greffage par la fonction (méth)acrylate d'alkyle peut être réalisé par tout procédé de greffage connu en soi, tels que le greffage par voie radicalaire classique ou voie radicalaire contrôlée, ou par ATRP (polymérisation par transfert d'atome).

Les différentes techniques et conditions de greffage sont largement décrites dans la littérature et relèvent des connaissances générales de l'homme de l'art.

Le greffage par voie radicalaire est particulièrement préféré. Le greffage s'effectue au niveau de l'acétate de vinyle : soit sur le groupe méthyle de l'acétate, soit sur les carbones tertiaires du squelette du copolymère, en fonction de la nature de l'agent amorceur de polymérisation.

Si l'agent amorceur est le peroxyde de benzoyle, le greffage est plutôt initié sur le groupe méthyle de l'acétate.

Si l'agent amorceur est le peroxyde de dicumyle, le greffage est plutôt initié sur les carbones tertiaires du squelette du copolymère, ou le groupe méthyle de l'acétate.

Dans le cas du copolymère (i) greffé, le motif de formule (I) représente de préférence de 71 à 94% en moles, par rapport au nombre de moles total de motifs du copolymère, plus préférentiellement, le copolymère comprend de 78 à 88% en moles de motifs de formule (I) par rapport au nombre de moles total de motifs du copolymère, plus préférentiellement encore de 80 à 88% en moles, et mieux encore de 82 à 87% en moles.

Et, le ou les motifs de formule (II) représente(nt) de préférence de 5 à 25% en moles, par rapport au nombre de moles total de motifs du copolymère, plus préférentiellement, le copolymère comprend de 10% à 15% en moles de motifs de formule (II).

Le ou les greffons de formule (III) représente(nt) de préférence de 1 à 4% en moles, par rapport au nombre de moles total de motifs du copolymère, plus préférentiellement, le copolymère comprend de 1.5 à 3% en moles de motifs de formule (II).

La masse molaire Mn des copolymères (i) greffés selon l'invention est de préférence comprise dans la gamme allant de 12.000 à 50.000 g.mol⁻¹, de préférence de 12.000 à 40.000 g.mol⁻¹, mieux de 12.000 à 32.000 g.mol⁻¹.

La masse molaire Mw des copolymères (i) greffés selon l'invention est de préférence comprise dans la gamme allant de 23.500 à 230.000 g.mol⁻¹, de préférence de 46.500 à 190.000 g.mol⁻¹, mieux de 55.000 à 150.000 g.mol⁻¹.

### Le polymère (ii)

Le premier composé de la composition d'additifs peut également être choisi parmi les polymères (ii) comprenant au moins 90% en moles de motifs issus de monomère (méth)acrylate d'alkyle dont la chaine alkyle est saturée et contient de 18 à 22 atomes de carbone.

Les monomères de (méth)acrylate d'alkyle répondent à la formule (IV) suivante : 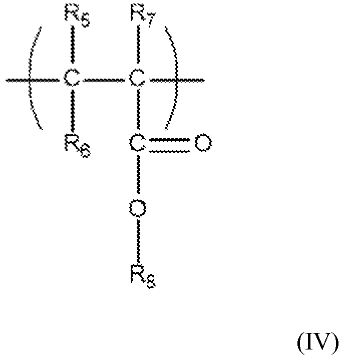 dans laquelle
R₅, R₆ identiques ou différents, représentent un atome d'hydrogène ou un groupe alkyle en C₁ à C₄ ;
R₇ représente un atome d'hydrogène ou un groupe méthyle ; et
R₈ représente une chaine alkyle saturée en C₁₈ à C₂₂.

Selon un mode de réalisation préféré, R₅, R₆, et R_{7,} identiques ou différents, représentent un atome d'hydrogène ou un groupe méthyle. De manière particulièrement préférée, R₅, R₆ et R₇ représentent tous un atome d'hydrogène ; ou R₅, R₆ représentent un atome d'hydrogène et R₇ représente un groupe méthyle.

Selon un mode de réalisation également préféré, R₈ représente une chaine alkyle saturée linéaire. Plus préférentiellement, R₈ est choisi parmi les groupes n-C₁₈H₃₇, n-C₁₉H₃₉ n-C₂₀H₄₁, n-C₂₁H₄₃, et n-C₂₂H₄₅.

Selon un mode de réalisation particulièrement préféré :
- R₅, R₆, et R₇ représentent tous un atome d'hydrogène, et
- R₈ est choisi parmi les groupes n-C₁₈H₃₇, n-C₁₉H₃₉ n-C₂₀H₄₁, n-C₂₁H₄₃, et n-C₂₂H₄₅.

De manière très préférée, R₈ est choisi parmi un mélange des groupes n-C₁₈H₃₇, n-C₂₀H₄₁, et n-C₂₂H₄₅. De manière également préférée, le (méth)acrylate d'alkyle est l'acrylate de béhényle.

Dans un mode de réalisation préféré, les polymères (ii) comprennent au moins 95% en moles, de préférence au moins 98%, et mieux 100% de motifs issus de monomère (méth)acrylate d'alkyle dont la chaine alkyle est saturée et contient de 18 à 22 atomes de carbone.

### Le second composé (résine)

La composition selon l'invention comprend un second composé choisi parmi les résines alkylphénol-aldéhyde modifiées ; ladite résine alkylphénol-aldéhyde modifiée étant susceptible d'être obtenue par réaction de Mannich d'une résine de condensation alkylphénol-aldéhyde :
- avec au moins un aldéhyde et/ou une cétone ayant de 1 à 8 atomes de carbone, et
- au moins un composé hydrocarboné ayant au moins un groupement alkylpolyamine, ayant de 1 à 30 atomes de carbone ;
ladite résine de condensation alkylphénol-aldéhyde étant elle-même susceptible d'être obtenue par condensation :
- d'au moins un alkylphénol substitué par au moins un groupement alkyle, linéaire ou ramifié, ayant de 1 à 30 atomes de carbone, avec
- au moins un aldéhyde et/ou une cétone ayant de 1 à 8 atomes de carbone.

Dans un mode de réalisation préféré, ladite résine alkylphénol-aldéhyde modifiée est susceptible d'être obtenue par réaction de Mannich d'une résine de condensation alkylphénol-aldéhyde :
- avec au moins un aldéhyde et/ou une cétone ayant de 1 à 4 atomes de carbone ;
- et au moins un composé hydrocarboné comprenant au moins un groupement alkylpolyamine ayant de 4 à 30 atomes de carbone,
ladite résine de condensation alkylphénol-aldéhyde étant elle-même susceptible d'être obtenue par condensation :
- d'un monoalkylphénol, avec
- au moins un aldéhyde et/ou une cétone ayant de 1 à 4 atomes de carbone.

La résine de condensation alkylphénol-aldéhyde peut être choisie parmi toute résine de ce type déjà connue et notamment, celles décrites dans les documents EP857776, EP1584673.

La résine alkylphénol-aldéhyde modifiée selon l'invention est, avantageusement, obtenue à partir de p-nonylphénol, de formaldéhyde et d'au moins un composé hydrocarboné comprenant au moins un groupement alkylpolyamine.

Selon un mode de réalisation, la résine est susceptible d'être obtenue à partir de p-nonylphénol et le nombre moyen de noyaux phénoliques par molécule de résine p-nonylphénol-aldéhyde modifiée est compris dans la gamme allant de 6 à 25, de préférence de 8 à 17, et encore plus préférentiellement de 9 à 16.

Le nombre de noyaux phénoliques peut être déterminé par résonance magnétique nucléaire (RMN) ou chromatographie à perméation de gel (GPC).

Avantageusement, la résine alkylphénol-aldéhyde modifiée est obtenue par mise en œuvre d'un même aldéhyde ou d'une même cétone aux deux étapes de sa préparation.

Selon un mode de réalisation préféré, la résine alkylphénol-aldéhyde modifiée peut être obtenue à partir d'au moins un aldéhyde et/ou une cétone choisis parmi le formaldéhyde, l'acétaldéhyde, le propionaldéhyde, le butyraldéhyde, le 2-éthyl-hexanal, le benzaldéhyde et/ou l'acétone. De préférence, la résine alkylphénol-aldéhyde modifiée peut être obtenue à partir d'au moins un aldéhyde, de préférence d'au moins le formaldéhyde (ou méthanal).

Selon un mode de réalisation particulier, la résine alkylphénol-aldéhyde modifiée est obtenue à partir d'au moins un composé hydrocarboné ayant au moins un groupement alkylpolyamine ayant au moins deux groupements amine primaire et/ou secondaire. En particulier, l'alkylpolyamine est avantageusement choisie parmi les polyamines primaires ou secondaires substituées par, respectivement, un ou deux groupements alkyles comprenant, de préférence, de 12 à 24 atomes de carbone, plus préférentiellement de 12 à 22 atomes de carbone.

Selon une variante préférée, la résine alkylphénol-aldéhyde modifiée est obtenue à partir d'au moins un composé hydrocarboné ayant au moins un groupement alkylpolyamine ayant au moins deux groupements amine primaire.

En particulier, la résine alkylphénol-aldéhyde modifiée peut avantageusement être obtenue à partir d'au moins une alkylpolyamine dont tous les groupements amine sont des amines primaires.

Selon une autre variante préférée, la résine alkylphénol-aldéhyde modifiée est obtenue à partir d'au moins une alkylpolyamine ayant au moins deux groupements amine primaire, de préférence trois groupements amine primaire, et comprenant une chaîne grasse ayant de 12 à 24 atomes de carbone, de préférence de 12 à 22 atomes de carbone.

L'alkylpolyamine est, de préférence, à chaîne grasse ayant de 12 à 24 atomes de carbone, de préférence de 12 à 22 atomes de carbone.

Les alkylpolyamines commerciales ne sont en général pas des composés purs mais des mélanges. Parmi les alkylpolyamines commercialisées qui conviennent, on peut notamment citer les alkylpolyamines à chaîne grasse commercialisées sous les dénominations Trinoram^{®}, Duomeen^{®}, Dinoram^{®}, Triameen^{®}, Armeen^{®}, Polyram^{®}, Lilamin^{®} et Cemulcat^{®}.

On peut citer à titre d'exemple préféré, la Trinoram^{®}S qui est une dipropylènetriamine de suif, connue également sous la dénomination N-(Tallowalkyl)dipropylènetriamine (CAS 61791-57-9).

### La composition d'additifs

La composition selon l'invention est telle que le ratio massique de la quantité du premier composé (1) sur la quantité du second composé (2) est compris dans la gamme allant de 1 à 10, de préférence de 1 à 6, plus préférentiellement de 1 à 5, et encore mieux de 1,5 à 4.

Selon un mode de réalisation, la composition comprend en outre un solvant organique.

À titre d'exemple, le solvant organique est choisi parmi les hydrocarbures aliphatiques et/ou aromatiques, et/ou choisi parmi les mélanges d'hydrocarbures, par exemple les fractions d'essence, de diesel, de kérosène, le décane, le pentadécane, le toluène, le xylène, l'éthylbenzène, les polyéthers.

De préférence, le mélange de solvant est un mélange de solvants aromatiques comprenant des composés aromatiques ayant 10 atomes de carbone, et/ou des composés aromatiques ayant 9 atomes de carbone, et/ou du xylène.

Dans un mode de réalisation, le composé (2) est introduit dans la composition préalablement dilué dans un mélange de solvants : 50% en volume d'un solvant organique cités ci-dessous tels que le Solvarex, et 50% en volume de xylène.

Dans ce cas, de préférence, le mélange de solvants aromatiques est introduit dans la solution de résine alkylphénol-aldéhyde modifiée (qui contient déjà 50%v de solvant) et de (co)polymères en une quantité volumique comprise entre 5 et 90% v/v par rapport au mélange de solvants aromatiques (C10, C9 et/ou xylène), de préférence entre 10-80% v/v, encore plus préférentiellement entre 30-80%v/v, et de manière très préférentielle entre 35-70% v/v.

Le solvant organique comprend une majorité (au moins 80% en poids) de composés aromatiques ayant typiquement 10 atomes de carbone. À titre d'exemples, le solvant est choisi parmi : Solvarex 10^{®}, Solvarex 10 LN^{®}, Solvent Naphta^{®}, Shellsol AB ^{®}, Shellsol D ^{®}, Solvesso 150 ^{®}, Solvesso 150 ND^{®}.

De préférence, le premier composé (1) est présent dans la composition d'additifs en une quantité comprise entre 2 et 50% en masse, de préférence entre 3 et 40, plus préférentiellement entre 5 et 35 %, en masse par rapport à la masse totale de la composition.

De préférence, le second composé (2) (la résine alkylphénol-aldéhyde modifiée) est présent dans la composition d'additifs en une quantité comprise entre 1 et 50 % en masse, de préférence entre 2 et 40%, plus préférentiellement de 5 à 30%, en masse par rapport à la masse totale de la composition.

### Autres additifs de la composition

La composition d'additifs peut également comprendre un ou plusieurs additif(s) additionnel(s), différent(s) desdits additifs selon l'invention.

Comme additifs additionnels susceptibles d'être incorporés dans la composition on peut citer : les dispersants/détergents, les inhibiteurs de corrosion, les biocides, les désémulsifiants ou agents anti-mousses, les inhibiteurs de dépôts de paraffines ; les abaisseurs de point d'écoulement, les additifs anti-sédimentation des paraffines ; les piégeurs d'H₂S , les inhibiteurs de dépôts organiques tels que les acides naphténiques, les inhibiteurs de dépôts minéraux, les marqueurs, les stabilisateurs thermiques, les émulsifiants, les agents réducteurs de frottements, les surfactants, et leurs mélanges.

Parmi les autres additifs additionnels, on peut citer particulièrement :
a) les additifs anti-mousse, notamment (mais non limitativement) choisis parmi les polysiloxanes, les polysiloxanes oxyalkylés, et les amides d'acides gras issus d'huiles végétales ou animales ;
b) les additifs détergents et/ou anti-corrosion, notamment (mais non limitativement) choisis dans le groupe constitué par les aminés, les succinimides, les alkénylsuccinimides, les polyalkylamines, les polyalkyles polyamines, les polyétheramines; les imidazolines; et les sels d'ammonium quaternaire dérivés des composés sus-cités,
c) les additifs de lubrifiance ou agent anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques ;
d) les additifs modificateurs de la cristallisation, les additifs inhibiteurs de dépôts de paraffines, les additifs abaisseurs du point d'écoulement ; les modificateurs de la rhéologie à basse température tels que les copolymères éthylène/vinyl propionate (EVP), les terpolymères éthylène/ acétate de vinyle/ versatate de vinyle (EA/AA/EOVA) ; les terpolymères éthylène/ acétate de vinyle/ acrylate d'alkyle ; les polyacrylates ; les terpolymères acrylates/acétate de vinyle/anhydride maléique ; les copolymères anhydride maléique/alkyl(méth)acrylate amidifiés susceptibles d'être obtenus par réaction d'un copolymère anhydride maléique/alkyl(méth)acrylate et d'une alkylamines ou polyalkylamine ayant une chaîne hydrocarbonée de 4 et 30 atomes de carbone, de préférence, de 12 à 24 atomes de carbone ; les copolymères d'alpha-oléfine/anhydride maléique amidifiés susceptibles d'être obtenus par réaction d'un copolymère d'alpha-oléfine/anhydride maléique et d'une alkylamine ou polyalkylamine, l'alpha-oléfine pouvant être choisi parmi les alpha-oléfine en C10-C50, de préférence, en C16-C20 et l'alkylamine ou la polyalkylamine ayant, avantageusement, une chaîne hydrocarbonée de 4 et 30 atomes de carbone, de préférence de 12 à 24 atomes de carbone. A titre d'exemples de terpolymères, on peut citer ceux qui sont décrits dans EP01692196, WO2009106743, WO2009106744, US4758365 et US4178951,
e) les neutralisateurs d'acidité.

Selon un mode de réalisation, la composition d'additifs comprend un agent dispersant. Ce mode de réalisation est préféré lorsque ladite composition d'additifs comprend un solvant tel que notamment une coupe d'hydrocarbures liquide.

À titre d'exemple, le dispersant est choisi parmi les surfactants, les sulfonates, les acides sulfoniques (de naphtalène, de dodécylbenzène...) ...

### Le produit pétrolier

Selon un mode de réalisation, la composition d'additifs est introduite dans un produit pétrolier liquide en une quantité telle que la teneur totale des deux composés (1) et (2) est comprise entre 10 et 2500 ppm en poids, de préférence entre 20 et 1800 ppm, de préférence entre 50 et 1500 ppm, de préférence entre 70 et 1000 ppm, de préférence entre 100 et 800 ppm, plus préférentiellement, de 400 à 700 ppm, plus préférentiellement de 550 à 650 ppm en poids, par rapport au poids total du produit pétrolier.

Selon un mode de réalisation, la composition d'additifs est introduite dans un produit pétrolier liquide en une quantité telle que la teneur en composé (1) est comprise entre 5 et 2495 ppm en poids, de préférence entre 10 et 2200 ppm, de préférence entre 30 et 2000 ppm, de préférence entre 100 et 1500 ppm, en poids, par rapport au poids total du produit pétrolier.

Selon un mode de réalisation, la composition d'additifs est introduite dans un produit pétrolier liquide en une quantité telle que la teneur en composé (2) est comprise entre 5 et 1000 ppm en poids, de préférence entre 10 et 800 ppm, de préférence entre 20 et 700 ppm, de préférence entre 10 et 500 ppm en poids, de préférence entre 10 et 300 ppm en poids, par rapport au poids total du produit pétrolier.

Dans l'invention, l'expression « produit pétrolier liquide » est synonyme d'huile brute ou pétrole brut (extraite d'un puits de pétrole, ou dans un puits de pétrole, ou dans un pipeline...), de carburant (de préférence gazole), de fioul/combustible lourd...

Par produit pétrolier « liquide » on entend qu'un tel produit pétrolier est à l'état liquide à température ambiante (25°C) et pression atmosphérique (1,03.10⁵ Pa).

Le produit pétrolier liquide est de préférence un pétrole brut ou une huile brute.

L'huile brute (ou pétrole brut) est issue d'une réserve naturelle ou formation rocheuse, de préférence sous-terraine, ou minerai sous-terrain. Elle est extraite via un puits ou « puits de forage », qui correspond à un trou ou puits pénétrant dans la formation rocheuse renfermant l'huile.

Les huiles brutes du puits peuvent être seules ou en mélange avec d'autres composants, comme par exemple de l'eau, du gaz et/ou de la saumure, ou d'autres additifs utilisés lors des forages (anti-calcaire...).

### L'utilisation

Un autre objet de l'invention est l'utilisation de la composition d'additifs, pour diminuer la viscosité dynamique d'un produit pétrolier liquide, de préférence à température inférieure ou égale à 30°C, plus préférentiellement inférieure ou égale 25°C, plus préférentiellement inférieure ou égale 20°C, plus préférentiellement inférieure ou égale 15°C, plus préférentiellement inférieure ou égale 10°C, plus préférentiellement inférieure ou égale 5°C, plus préférentiellement encore inférieure ou égale 0°C, mieux inférieure ou égale -5°C, et mieux encore inférieure ou égale à - 15°C.

La viscosité dynamique, bien connue de l'homme du métier, caractérise la résistance à l'écoulement laminaire d'un fluide incompressible.

La mesure de la viscosité s'effectue avec un rhéomètre Anton Paar MCR 302, géométrie cylindres coaxiaux 27mm, pilotage CSR (controlled shear rate): on détermine les courbes d'écoulement et on obtient la viscosité. Cette méthode de détermination est bien connue de l'homme du métier.

La composition d'additifs selon l'invention est également utilisée pour limiter les phénomènes d'agrégation/de cristallisation des paraffines ; et/ou pour les disperser et/ou retarder leur cristallisation dans un produit pétrolier liquide.

Un autre objet de l'invention est l'utilisation de la composition d'additifs pour limiter la formation des dépôts de paraffines sur les parois d'une conduite de transport d'un produit pétrolier liquide (pipe).

La composition d'additifs selon l'invention est également utilisée pour abaisser le point d'écoulement d'un produit pétrolier liquide. Le point d'écoulement est la température minimale à laquelle une substance (pétrole brut) s'écoule encore. Il est mesuré selon la norme ASTM D5853.

La composition d'additifs selon l'invention est également utilisée pour diminuer la contrainte de cisaillement, le seuil de cisaillement, et/ou la viscosité lors de l'écoulement d'un produit pétrolier liquide, de préférence à température inférieure ou égale à 85°C, plus préférentiellement inférieure ou égale 75°C, plus préférentiellement encore inférieure ou égale 65°C, mieux inférieure ou égale 55°C, plus préférentiellement inférieure ou égale 45°C, plus préférentiellement inférieure ou égale 35°C, plus préférentiellement inférieure ou égale 25°C, plus préférentiellement inférieure ou égale 10°C, plus préférentiellement inférieure ou égale 5°C, plus préférentiellement encore inférieure ou égale 0°C, mieux inférieure ou égale -5°C, et mieux encore inférieure ou égale à -15°C.

La contrainte de cisaillement est le rapport d'une force tangentielle appliquée à une surface sur l'aire de la section tangentielle à la force. La contrainte de cisaillement est mesurée avec un rhéomètre Anton Paar MCR 302, géométrie cylindres coaxiaux 27mm, pilotage CSR. Les courbes d'écoulement permettent de déduire la contrainte de cisaillement.

Le produit pétrolier liquide est de préférence un gazole, un pétrole brut ou un fioul lourd, de préférence un pétrole brut.

L'invention vise à faciliter l'extraction du pétrole brut, notamment en évitant/inhibant/retardant/réduisant la cristallisation et donc les phénomènes d'agrégation des paraffines. Ce phénomène peut concerner des compositions ayant des teneurs en paraffines très variées.

### Le procédé de diminution de la viscosité d'un produit pétrolier liquide

L'invention concerne également un procédé de diminution de la viscosité d'un produit pétrolier liquide et/ou de limitation des phénomènes d'agrégation des paraffines, et/ou de dispersion des paraffines et/ou de retardement de la cristallisation des paraffines, dans un produit pétrolier liquide, comprenant au moins les étapes suivantes:
- la préparation d'une composition d'additifs telle que définie ci-dessus, puis
- l'introduction de ladite composition d'additifs dans un produit pétrolier liquide, de préférence un pétrole brut.

L'introduction de ladite composition d'additifs dans le produit pétrolier liquide est réalisée à une température suffisamment élevée, c'est-à-dire quand les paraffines sont encore dissoutes dans la matrice de produit pétrolier, soit entre 45 et 90°C, de préférence entre 60 et 90°C.

Selon le procédé de l'invention, ladite composition d'additifs est introduite dans un produit pétrolier liquide en une quantité telle que la teneur totale des deux composés (1) et (2) est comprise entre 10 et 2500 ppm en poids, de préférence entre 20 et 1800 ppm, de préférence entre 50 et 1500 ppm, de préférence entre 70 et 1000 ppm, de préférence entre 100 et 800 ppm, plus préférentiellement, de 400 à 700 ppm, plus préférentiellement de 550 à 650 ppm en poids.

Les exemples qui suivent servent à illustrer l'invention sans toutefois présenter un caractère limitatif.

### Exemples :

Dans les exemples qui suivent, les teneurs exprimées en ppm correspondent à des ppm massiques. L'expression « ma » signifie matière active.

### Exemple 1 : additifs mis en œuvre

Les exemples mettent en œuvre les additifs suivants :
Comme premier composé (1) selon l'invention :
- un homopolymère obtenu par polymérisation radicalaire de monomères acrylate de béhényle, et dont la masse molaire Mw est de 20.000 g/mol, dénommé ci-après C1 ; le composé C1 est constitué d'une solution du polymère polyacrylate à une concentration de 32% en masse dans un solvant aromatique en C₁₀ ;
- un copolymère d'éthylène et d'acétate de vinyle (EVA) non greffé, comprenant 33% en masse d'acétate de vinyle, et dont les masses molaires sont Mn=15.440 g/mol, Mw=48.025 g/mol (indice de polydispersité Ip=3.1), dénommé ci-après C2 ; le composé C2 est constitué d'une solution du copolymère EVA à une concentration de 20% en masse dans un solvant aromatique en C₁₀ ;
- un copolymère d'éthylène et d'acétate de vinyle (EVA) greffé, comprenant 5 % en masse d'acétate de vinyle et 74% en masse d'acrylate de béhényle , et dont les masses molaires sont Mn=24.471 g/mol, Mw=118.528 g/mol (indice de polydispersité Ip=4,8), dénommé ci-après C3 ; le composé C3 est constitué d'une solution du copolymère EVA greffé à une concentration de 38 % en masse dans un solvant aromatique en C₁₀.

Comme second composé (2) selon l'invention : une résine résine alkylphénol-aldéhyde modifiée, dénommée ci-après Rés1, et dont la méthode de synthèse est détaillée ci-dessous.

A titre comparatif, les exemples mettent également en œuvre un additif polyisobutylène succinimide, dénommé ci-après PIBSI, obtenu par condensation d'anhydride succinique greffé par un groupement polyisobutylène de masse moléculaire Mw de 1000 g/mol avec la tétraéthylènepentamine.

Les masses molaires moyennes en nombre (Mₙ) et en masse (M_{w}), ont été déterminées sur une chaine chromatographique d'exclusion stérique par perméation de gel AGILENT PL-GPC50-Plus. Le solvant d'élution est le tétrahydrofurane et les étalons sont constitués de polystyrènes.

### Synthèse de la résine alkylphénol-aldéhyde modifiée (Rés1)

Étape 1 : Dans une première étape, on prépare une résine alkylphénol-aldéhyde par condensation de para-nonylphénol et de formaldéhyde (par exemple selon le mode opératoire décrit dans EP857776), de viscosité à 50°C comprise entre 1800 et 4800 mPa.s (viscosité mesurée à 50°C à l'aide d'un rhéomètre dynamique avec une vitesse de cisaillement de 10 s⁻¹ sur la résine diluée avec 30% en masse de solvant aromatique (Solvesso 150 ^{®})).

Etape 2 : Dans une seconde étape, la résine alkylphénol-aldéhyde issue de la première étape est modifiée par réaction de Mannich par ajout de 2 équivalents molaires de formaldéhyde et 2 équivalents molaires de dipropylènetriamine de suif, connue sous la dénomination N-(Tallowalkyl)dipropylènetriamine et commercialisée par exemple sous la dénomination Trinoram S^{®}, par rapport à la résine alkylphénol- aldéhyde issue de la première étape.

Les caractéristiques de la résine (dénommée Rés1) obtenue à l'issue de l'étape 2 sont répertoriées dans le tableau 1 suivant :

**[Tableau 1]**

| Alkylpolyamine | Matière sèche (1g / 30 mn / 200°C) | Viscosité cinématique (mm²/s) (1) | | N_{Phe} (2) |
|---|---|---|---|---|
| Trinoram S^{®} | 50% | 120 | | 14,1 |

| | | | | |
|---|---|---|---|---|
| (1) Viscosité cinématique mesurée conformément à la norme NF EN ISO3405 à 40°C, sur la résine diluée avec 50% massique de solvant Solvesso 150^{®}, (2) Evaluation du nombre moyen de noyaux phénoliques par molécule de résine ou N_{Phe} : mesuré par résonnance magnétique nucléaire du proton. | | | | |

### Exemple 2 : Compositions d'additifs comprenant C1 + Rés1

### 2.1 Mesures de contrainte de cisaillement

Le composé C1 et/ou la résine Rés 1 ont été incorporés dans un pétrole brut, et la contrainte de cisaillement à différentes températures a été mesurée avec un rhéomètre Anton Paar MCR 302, géométrie cylindres coaxiaux 27mm, pilotage CSR. Elle est mesurée à un taux de cisaillement de 90 s⁻¹.

Les valeurs des contraintes de cisaillement obtenues (exprimées en Pa) sont rassemblées dans le tableau 2 ci-dessous.

**[Tableau 2]**

| Température | | Comparatif 1: Pétrole brut non additivé | | Comparatif 2: Pétrole brut + 1000 ppm C1 (soit en ma 320 ppm) | | Invention : Pétrole brut + 1000 ppm additif = 800 ppm C1 + 200 ppm Rés 1 ; soit en ma : 256 ppm C1 + 100 ppm Rés.1 ; ratio pondéral ma C1/Rés1 de 2,56:1 | |
|---|---|---|---|---|---|---|---|
| | 65°C | | 4,61 | | 4,31 | | 3,96 |
| | 55°C | | 7,93 | | 7,10 | | 6,39 |
| | 45°C | | 13,68 | | 12,05 | | 10,78 |
| | 35°C | | 23,63 | | 20,64 | | 18,25 |
| | 25°C | | 48,97 | | 40,14 | | 34,83 |

Les résultats ci-dessus montrent que la contrainte de cisaillement du pétrole brut comprenant la composition d'additifs selon l'invention est inférieure aux contraintes de cisaillement du pétrole brut seul (comparatif 1) et du mélange pétrole brut et composé C1 (comparatif 2).

### 2.2. Mesures de viscosité dynamique

Les compositions d'additifs selon l'invention suivantes ont été préparées, à partir du composé C1 et de la résine Rés1, dilués dans un solvant organique constitué d'un mélange de composés aromatiques en C9 et de xylène :
- Composition d'additif A1 : C1 + Rés 1 avec un ratio pondéral C1/Rés1 de 4 :1 (soit en ma 2,56 :1);
- Composition d'additif A2 : C1 + Rés 1 avec un ratio pondéral C1/Rés1 de 3 :1 (soit en ma 1,92 :1).

Chaque composition comprend 35% en poids d'additifs et 65% en poids de solvant organique.

Ces compositions A1 et A2 ont été incorporées dans un pétrole brut, et la viscosité dynamique a été mesurée avec un rhéomètre Anton Paar MCR 302, géométrie cylindres coaxiaux 27mm, pilotage CSR. Elle est mesurée à un taux de cisaillement de 38 s⁻¹.

Les valeurs de viscosité obtenues (exprimées en mPa.s) sont rassemblées dans le tableau 3 ci-dessous.

**[Tableau 3]**

| | Viscosité à 23°C | Viscosité à 18°C |
|---|---|---|
| Comparatif : pétrole brut non additivé | 2540 | 5290 |
| Invention : pétrole brut + 2000 ppm A1 | 2214 | 5111 |
| Invention : pétrole brut + 2000 ppm A2 | 2113 | 4688 |

Les résultats ci-dessus montrent que la viscosité dynamique du pétrole brut comprenant les compositions d'additifs selon l'invention est inférieure à la viscosité dynamique du pétrole brut seul (comparatif).

Des essais ont également été effectués, en comparant la composition A1 à la résine Rés.1 seule. La viscosité dynamique a été mesurée avec un rhéomètre Anton Paar MCR 302, géométrie cylindres coaxiaux 27mm, pilotage CSR. Elle est mesurée à un taux de cisaillement de 38 s⁻¹.

Les valeurs de viscosité obtenues (exprimées en mPa.s) sont rassemblées dans le tableau 4 ci-dessous.

**[Tableau 4]**

| | Viscosité à 23°C | Viscosité à 18°C |
|---|---|---|
| Comparatif : pétrole brut non additivé | 2540 | 5290 |
| Comparatif : pétrole brut + 520 ppm Rés.1 (260 ppm de ma) | 2240 | 4820 |
| Comparatif : pétrole brut + 1300 ppm Rés.1 (650 ppm de ma) | 2370 | 4950 |
| Invention : pétrole brut + 1040 ppm C1 + 260 ppm Rés.1 (332,8 ppm ma C1 + 130 ppm ma Rés1 ; ratio pondéral C1/Rés1 = 2,56 :1) | 2170 | 4690 |

Les résultats ci-dessus montrent que l'ajout de la résine seule ne permet pas d'abaisser suffisamment la viscosité, et qu'une augmentation de la teneur en résine tend à dégrader la viscosité. C'est la synergie des deux composés C1 et Rés1 qui permet d'abaisser substantiellement la viscosité.

### Exemple 3 : Compositions d'additifs comprenant C2 + Rés1

### 3.1. Mesures de viscosité dynamique

Les additifs C2, Rés 1 et PIBSI ont été incorporés dans un pétrole brut, et la viscosité dynamique à différentes température a été mesurée avec un rhéomètre Anton Paar MCR 302, géométrie cylindres coaxiaux 27mm, pilotage CSR. Elle est mesurée à un taux de cisaillement fixe de 0,02 s⁻¹.

Les valeurs de viscosité obtenues (exprimées en Pa.s) sont rassemblées dans le tableau 5 ci-dessous.

**[Tableau 5]**

| Température | Pétrole brut | Pétrole brut + 500 ppm C2 (soit 100 ppm ma) | Pétrole brut + 400 ppm C2 + 100 ppm PIBSI (soit en ma : 80 ppm C2 + 50 ppm PIBSI ; ratio pondéral 1,6 :1) | Pétrole brut + 400 ppm C2 + 100 ppm Rés.1 (soit en ma : 80 ppm C2 + 50 ppm Rés1 ; ratio pondéral 1,6 :1) |
|---|---|---|---|---|
| 25°C | 124,38 | 3,43 | 8,74 | 2,11 |
| 20°C | 448,83 | 38,03 | 48,16 | 25,55 |
| 15°C | 2029,30 | 128,93 | 164,17 | 94,16 |
| 10°C | 4738,80 | 269,10 | 584,25 | 258,30 |

Des mesures ont également été effectuées à température fixe de 10°C, et en faisant varier le taux de cisaillement de 10 à 500 s⁻¹.

Les valeurs de viscosité obtenues (exprimées en Pa.s) sont rassemblées dans le tableau 6 ci-dessous.

**[Tableau 6]**

| Taux de cisaillement | Pétrole brut | Pétrole brut + 500 ppm C2 (soit 100 ppm ma) | Pétrole brut + 400 ppm C2 + 100 ppm PIBSI (soit en ma : 80 ppm C2 + 50 ppm PIBSI ; ratio pondéral 1,6 :1) | Pétrole brut + 400 ppm C2 + 100 ppm Rés.1 (soit en ma : 80 ppm C2 + 50 ppm Rés1 ; ratio pondéral 1,6 :1) |
|---|---|---|---|---|
| 10 s⁻¹ | 22,45 | 0,65 | 1,61 | 1,02 |
| 100 s⁻¹ | 6,30 | 0,19 | *0,55* | 0,18 |
| 500 s⁻¹ | 1,01 | 0,16 | 0,39 | 0,18 |

Ces résultats présentés aux tableaux 5 et 6 ci-dessus montrent que la composition d'additifs selon l'invention (association C2 + Rés.1) permet de diminuer de manière importante la viscosité, par rapport aux trois comparatifs.

La composition selon l'invention permet en outre de diminuer la quantité de matière active EVA employée (composé C2), tout en améliorant les performances en réduction de viscosité lors d'un refroidissement, ce que ne permet pas le dopage en PIBSI à taux équivalent total d'additifs employés.

### 3.2. Mesures du seuil d'écoulement

Des mesures de seuil d'écoulement à 10°C ont également été réalisées, sur le même pétrole brut additivé avec les mêmes composés qu'à l'exemple 3.1 ci-avant.

Les mesures ont été réalisées avec un rhéomètre Anton Paar MCR 302, géométrie cylindres coaxiaux 27mm, pilotage CSR, à un taux de cisaillement de 38 s⁻¹.

Les valeurs de seuil d'écoulement obtenues (exprimées en Pa) sont rassemblées dans le tableau 7 ci-dessous.

**[Tableau 7]**

| Pétrole brut | Pétrole brut + 500 ppm C2 (soit 100 ppm ma) | Pétrole brut + 400 ppm C2 + 100 ppm PIBSI (soit en ma : 80 ppm C2 + 50 ppm PIBSI ; ratio pondéral 1,6 :1) | Pétrole brut + 400 ppm C2 + 100 ppm Rés.1 (soit en ma : 80 ppm C2 + 50 ppm Rés1 ; ratio pondéral 1,6 :1) |
|---|---|---|---|
| 52,31 | 3,16 | 6,84 | 3,43 |

Ces résultats montrent que la composition d'additifs selon l'invention (association C2 + Rés.1) permet de diminuer de manière importante le seuil d'écoulement, par rapport aux trois comparatifs.

La composition selon l'invention permet en outre de diminuer la quantité de matière active EVA employée (composé C2), tout en améliorant les performances en réduction du seuil d'écoulement, ce que ne permet pas le dopage en PIBSI à taux équivalent total d'additifs employés.

### Exemple 4 : Compositions d'additifs comprenant C3 + Rés1

### 4.1. Mesures de viscosité dynamique

Une composition d'additifs selon l'invention a été préparée, à partir du composé C3 et de la résine Rés1, dilués dans un solvant organique constitué d'un mélange de composés aromatiques en C9 et de xylène :
- Composition d'additif A3: C3 + Rés 1 avec un ratio pondéral C3/Rés1 de 4 :1 (soit en ma 3,04 :1).

Cette composition A3 comprend 12% en poids d'additifs et 88% en poids de solvant organique.

La composition A3 a été incorporée dans un pétrole brut, ayant une densité à 15°C de 0,911 g/cm³ un point d'écoulement de +15°C.

Les mesures de viscosité dynamique ont été réalisées avec un rhéomètre Anton Paar MCR 302, géométrie cylindres coaxiaux 27mm, pilotage CSR, et à un taux de cisaillement de 38 s⁻¹.

Les valeurs de viscosité obtenues (exprimées en mPa.s) sont rassemblées dans le tableau 8 ci-dessous.

**[Tableau 8]**

| | Viscosité à 23°C | Viscosité à 18°C |
|---|---|---|
| Comparatif : pétrole brut non additivé | 1000 | 2000 |
| Invention : pétrole brut + 1250 ppm A3 | 500 | 1000 |

Les résultats ci-dessus montrent que la viscosité dynamique du pétrole brut comprenant la composition d'additifs selon l'invention est inférieure à la viscosité dynamique du pétrole brut seul (comparatif).

Des essais ont également été effectués, en comparant la composition A3 à la résine Rés.1 seule.

Les valeurs de viscosité obtenues (exprimées en mPa.s) sont rassemblées dans le tableau 9 ci-dessous.

**[Tableau 9]**

| | Viscosité à 23°C | Viscosité à 18°C |
|---|---|---|
| Comparatif : pétrole brut non additivé | 1000 | 2000 |
| Comparatif : pétrole brut + 50 ppm Rés.1 (25 ppm de ma) | 1000 | 2000 |
| Invention : pétrole brut + 9,6 ppm C3 + 2,4 ppm Rés.1 (3,65 ppm ma C3 + 1,2 ppm ma Rés1 ; ratio pondéral C1/Rés1 = 3,04 :1) | 700 | 1500 |

Les résultats ci-dessus montrent que l'ajout de la résine seule ne permet pas d'abaisser la viscosité de ce pétrole brut. C'est la synergie des deux composés C3 et Rés1 qui permet d'abaisser substantiellement la viscosité.

## Revendications

1. Composition d'additifs comprenant :
(1) au moins un premier composé choisi parmi :
(i) les copolymères d'éthylène et d'acétate de vinyle ayant une masse molaire Mn comprise dans la gamme allant de 10.000 à 60.000 g.mol-1, optionnellement greffés par au moins un groupement (méth)acrylate d'alkyle dont la chaine alkyle est saturée et contient de 12 à 30 atomes de carbone ; et
(ii) les polymères comprenant au moins 90% en moles de motifs issus de monomère (méth)acrylate d'alkyle dont la chaine alkyle est saturée et contient de 18 à 22 atomes de carbone ;
(2) au moins un second composé choisi parmi les résines alkylphénol-aldéhyde modifiées ;
ledites résines alkylphénol-aldéhyde modifiées étant susceptibles d'être obtenues par réaction de Mannich d'une résine de condensation alkylphénol-aldéhyde :
• avec au moins un aldéhyde et/ou une cétone ayant de 1 à 8 atomes de carbone, et
• au moins un composé hydrocarboné comprenant au moins un groupement alkylpolyamine ayant entre 1 et 30 atomes de carbone ;
ladite résine de condensation alkylphénol-aldéhyde étant elle-même susceptible d'être obtenue par condensation :
• d'au moins un alkylphénol substitué par au moins un groupement alkyle, linéaire ou ramifié, ayant de 1 à 30 atomes de carbone, avec
• au moins un aldéhyde et/ou une cétone ayant de 1 à 8 atomes de carbone ; et
dans laquelle le ratio massique de la quantité du premier composé (1) sur la quantité du second composé (2) est compris dans la gamme allant de 1 à 10.

2. Composition selon la revendication 1, dans laquelle le ratio massique de la quantité du premier composé (1) sur la quantité du second composé (2) est compris dans la gamme allant de 1 à 6, plus préférentiellement de 1 à 5, et encore mieux de 1,5 à 4.

3. Composition selon l'une quelconque des revendications 1 ou 2, dans laquelle les greffons (méth)acrylate d'alkyle des polymères (i) comportent une chaine alkyle saturée ayant de 14 à 26 atomes de carbone, et de préférence ayant de 18 à 22 atomes de carbone.

4. Composition selon l'une quelconque des revendications 1 à 3, dans laquelle les polymères (ii) comprennent au moins 95% en moles, de préférence au moins 98%, et mieux 100% en moles desdits motifs issus de monomère (méth)acrylate d'alkyle.

5. Composition selon l'une quelconque des revendications 1 à 4, dans laquelle lesdites résines alkylphénol-aldéhyde modifiées sont susceptibles d'être obtenues par réaction de Mannich d'une résine de condensation alkylphénol-aldéhyde :
• avec au moins un aldéhyde et/ou une cétone ayant de 1 à 4 atomes de carbone ; et
• au moins un composé hydrocarboné comprenant au moins un groupement alkylpolyamine ayant entre 4 et 30 atomes de carbone,
ladite résine de condensation alkylphénol-aldéhyde étant elle-même susceptible d'être obtenue par condensation :
• d'un monoalkylphénol avec
• au moins un aldéhyde et/ou une cétone ayant de 1 à 4 atomes de carbone.

6. Composition selon l'une quelconque des revendications précédentes, dans laquelle les résines alkylphénol-aldéhyde modifiées sont susceptibles d'être obtenues à partir de p-nonylphénol, de formaldéhyde et d'au moins un composé hydrocarboné comprenant au moins un groupement alkylpolyamine.

7. Composition selon l'une quelconque des revendications précédentes, dans laquelle les résines alkylphénol-aldéhydes modifiées sont susceptibles d'être obtenues à partir de p-nonylphénol et le nombre moyen de noyaux phénoliques par molécule de résine p-nonylphénol-aldéhyde modifiée est compris dans la gamme allant de 6 à 25, de préférence de 8 à 17, et encore plus préférentiellement de 9 à 16.

8. Composition selon l'une quelconque des revendications précédentes, dans laquelle le composé hydrocarboné ayant au moins un groupement alkylpolyamine comprend au moins deux groupements amine primaire et une chaine grasse ayant de 12 à 24 atomes de carbone, de préférence de 12 à 22 atomes de carbone, et de préférence ledit composé hydrocarboné est la dipropylènetriamine de suif.

9. Composition selon l'une quelconque des revendications précédentes, **caractérisée en ce qu'**elle comprend en outre un solvant organique, de préférence choisi parmi un solvant aromatique, tel que le xylène ; une coupe d'hydrocarbures liquide telle qu'une coupe gazole ; et les mélanges de tels solvants.

10. Utilisation de la composition définie dans l'une quelconque des revendications précédentes, pour diminuer la viscosité dynamique d'un produit pétrolier liquide, de préférence à température inférieure ou égale à 30°C, plus préférentiellement inférieure ou égale 25°C, plus préférentiellement inférieure ou égale 20°C, plus préférentiellement inférieure ou égale 15°C, plus préférentiellement inférieure ou égale 10°C, plus préférentiellement inférieure ou égale 5°C, plus préférentiellement encore inférieure ou égale 0°C, mieux inférieure ou égale -5°C, et mieux encore inférieure ou égale à -15°C.

11. Utilisation de la composition définie dans l'une quelconque des revendications 1 à 9, pour limiter les phénomènes d'agrégation des paraffines ; et/ou pour les disperser et/ou retarder leur cristallisation dans un produit pétrolier liquide.

12. Utilisation de la composition définie dans l'une quelconque des revendications 1 à 9 pour abaisser le point d'écoulement d'un produit pétrolier liquide.

13. Utilisation de la composition définie dans l'une quelconque des revendications 1 à 9, pour limiter la formation des dépôts de paraffines sur les parois d'une conduite de transport d'un produit pétrolier liquide (pipe).

14. Utilisation selon l'une quelconque des revendications 10 à 13, dans laquelle le produit pétrolier liquide est un gazole, un pétrole brut ou un fioul lourd, de préférence un pétrole brut.

15. Utilisation selon l'une quelconque des revendications 10 à 14, dans laquelle la résine alkylphénol-aldéhyde modifiée est introduite dans la composition d'additifs en une quantité comprise entre 100 et 20 000 ppm en poids, de préférence entre 1000 et 15 000 ppm, de préférence entre 2000 et 12 000 ppm, de préférence entre 3000 et 10 000 ppm, de préférence entre 4000 et 5000 ppm en poids par rapport au poids total de la composition.

16. Procédé de diminution de la viscosité d'un produit pétrolier liquide et/ou de limitation des phénomènes d'agrégation des paraffines, et/ou de dispersion des paraffines et/ou de retardement de la cristallisation des paraffines, dans un produit pétrolier liquide, de préférence un pétrole brut, comprenant au moins les étapes suivantes :
- la préparation d'une composition d'additifs telle que définie dans l'une quelconque des revendications 1 à 9, puis
- l'introduction de ladite composition d'additifs dans ledit produit pétrolier liquide, en une quantité telle que la teneur totale des deux composés (1) et (2) est comprise dans la gamme allant de 10 à 2500 ppm en poids, de préférence de 20 à 1800 ppm, de préférence de 50 à 1500 ppm, de préférence de 70 à 1000 ppm, de préférence de 100 à 800 ppm, plus préférentiellement de 400 à 700 ppm, plus préférentiellement encore de 550 à 650 ppm en poids

## Patentansprüche

1. Additivzusammensetzung, umfassend:
(1) mindestens eine erste Verbindung, ausgewählt aus:
(i) Copolymeren von Ethylen und Vinylacetat mit einer Molmasse Mn im Bereich von 10.000 bis 60.000 g.mol-1, gegebenenfalls gepfropft mit mindestens einer Alkyl(meth)acrylat-Gruppe, deren Alkylkette gesättigt ist und 12 bis 30 Kohlenstoffatome enthält; und
(ii) Polymeren, die mindestens 90 Mol-% Einheiten, die sich von einem Alkyl(meth)acrylat-Monomer ableiten, dessen Alkylkette gesättigt ist und 18 bis 22 Kohlenstoffatome enthält, umfassen;
(2) mindestens eine zweite Verbindung, ausgewählt aus modifizierten Alkylphenol-Aldehyd-Harzen;
wobei die modifizierten Alkylphenol-Aldehyd-Harze erhältlich sind durch Mannich-Reaktion eines Alkylphenol-Aldehyd-Kondensationsharzes:
• mit mindestens einem Aldehyd und/oder einem Keton mit 1 bis 8 Kohlenstoffatomen und
• mindestens einer Kohlenwasserstoffverbindung mit mindestens einer Alkylpolyamin-Gruppe, die zwischen 1 und 30 Kohlenstoffatome aufweist;
wobei das Alkylphenol-Aldehyd-Kondensationsharz selbst erhältlich ist durch Kondensation von:
• mindestens einem Alkylphenol, das durch mindestens eine geradkettige oder verzweigte Alkylgruppe mit 1 bis 30 Kohlenstoffatomen substituiert ist, mit
• mindestens einem Aldehyd und/oder einem Keton mit 1 bis 8 Kohlenstoffatomen; und
wobei das Gewichtsverhältnis der Menge der ersten Verbindung (1) zur Menge der zweiten Verbindung (2) im Bereich von 1 bis 10 liegt.

2. Zusammensetzung nach Anspruch 1, wobei das Gewichtsverhältnis der Menge der ersten Verbindung (1) zur Menge der zweiten Verbindung (2) im Bereich von 1 bis 6, weiter bevorzugt von 1 bis 5 und noch besser von 1,5 bis 4 liegt.

3. Zusammensetzung nach Anspruch 1 oder 2, wobei die Alkyl(meth)acrylat-Pfropfanteile der Polymere (i) eine gesättigte Alkylkette mit 14 bis 26 Kohlenstoffatomen und vorzugsweise mit 18 bis 22 Kohlenstoffatomen aufweisen.

4. Zusammensetzung nach einem der Ansprüche 1 bis 3, wobei die Polymere (ii) mindestens 95 Mol-%, vorzugsweise mindestens 98 Mol-% und noch besser 100 Mol-% der Einheiten, die sich von einem Alkyl(meth)acrylat-Monomer ableiten, umfassen.

5. Zusammensetzung nach einem der Ansprüche 1 bis 4, wobei die modifizierten Alkylphenol-Aldehyd-Harze erhältlich sind durch Mannich-Reaktion eines Alkylphenol-Aldehyd-Kondensationsharzes:
• mit mindestens einem Aldehyd und/oder einem Keton mit 1 bis 4 Kohlenstoffatomen und
• mindestens einer Kohlenwasserstoffverbindung mit mindestens einer Alkylpolyamin-Gruppe, die zwischen 4 und 30 Kohlenstoffatome aufweist,
wobei das Alkylphenol-Aldehyd-Kondensationsharz selbst erhältlich ist durch Kondensation von:
• einem Monoalkylphenol mit
• mindestens einem Aldehyd und/oder einem Keton mit 1 bis 4 Kohlenstoffatomen.

6. Zusammensetzung nach einem der vorhergehenden Ansprüche, wobei die modifizierten Alkylphenol-Aldehyd-Harze aus p-Nonylphenol, Formaldehyd und mindestens einer Kohlenwasserstoffverbindung mit mindestens einer Alkylpolyamin-Gruppe erhältlich sind.

7. Zusammensetzung nach einem der vorhergehenden Ansprüche, wobei die modifizierten Alkylphenol-Aldehyd-Harze aus p-Nonylphenol erhältlich sind und die durchschnittliche Zahl von Phenolkernen pro Molekül des modifizierten p-Nonylphenol-Aldehyd-Harzes im Bereich von 6 bis 25, vorzugsweise von 8 bis 17 und noch besser von 9 bis 16 liegt.

8. Zusammensetzung nach einem der vorhergehenden Ansprüche, wobei die Kohlenwasserstoffverbindung mit mindestens einer Alkylpolyamin-Gruppe mindestens zwei primäre Amingruppen und eine Fettkette mit 12 bis 24 Kohlenstoffatomen, vorzugsweise 12 bis 22 Kohlenstoffatomen, umfasst und es sich bei der Kohlenwasserstoffverbindung vorzugsweise um Talgdipropylentriamin handelt.

9. Zusammensetzung nach einem der vorhergehenden Ansprüche, **dadurch gekennzeichnet, dass** sie außerdem ein organisches Lösungsmittel umfasst, das vorzugsweise aus einem aromatischen Lösungsmittel, wie Xylol; einer flüssigen Kohlenwasserstofffraktion wie einer Gasölfraktion; und Mischungen solcher Lösungsmittel ausgewählt ist.

10. Verwendung der Zusammensetzung gemäß einem der vorhergehenden Ansprüche zur Verringerung der dynamischen Viskosität eines flüssigen Erdölprodukts, vorzugsweise bei einer Temperatur kleiner oder gleich 30 °C, weiter bevorzugt kleiner oder gleich 25 °C, weiter bevorzugt kleiner oder gleich 20 °C, weiter bevorzugt kleiner oder gleich 15 °C, weiter bevorzugt kleiner oder gleich 10 °C, weiter bevorzugt kleiner oder gleich 5 °C, noch weiter bevorzugt kleiner oder gleich 0 °C, besser kleiner oder gleich -5 °C und noch besser kleiner oder gleich -15 °C.

11. Verwendung der Zusammensetzung gemäß einem der Ansprüche 1 bis 9 zur Begrenzung von Aggregationsphänomenen von Paraffinen und/oder zur Dispergierung und/oder Verzögerung der Kristallisation von Paraffinen in einem flüssigen Erdölprodukt.

12. Verwendung der Zusammensetzung gemäß einem der Ansprüche 1 bis 9 zur Erniedrigung des Pourpoints eines flüssigen Erdölprodukts.

13. Verwendung der Zusammensetzung gemäß einem der Ansprüche 1 bis 9 zur Begrenzung der Bildung von Paraffinablagerungen an den Wänden einer Leitung zum Transport eines flüssigen Erdölprodukts (Rohr).

14. Verwendung nach einem der Ansprüche 10 bis 13, wobei es sich bei dem flüssigen Erdölprodukt um ein Gasöl, ein Rohöl oder ein Schweröl, vorzugsweise ein Rohöl, handelt.

15. Verwendung nach einem der Ansprüche 10 bis 14, wobei das modifizierte Alkylphenol-Aldehyd-Harz in die Additivzusammensetzung in einer Menge zwischen 100 und 20.000 Gew.-ppm, vorzugsweise zwischen 1000 und 15.000 Gew.-ppm, vorzugsweise zwischen 2000 und 12.000 Gew.-ppm, vorzugsweise zwischen 3000 und 10.000 Gew.-ppm, vorzugsweise zwischen 4000 und 5000 Gew.-ppm, bezogen auf das Gesamtgewicht der Zusammensetzung, eingetragen wird.

16. Verfahren zur Verringerung der Viskosität eines flüssigen Erdölprodukts und/oder zur Begrenzung von Aggregationsphänomenen von Paraffinen und/oder zur Dispergierung von Paraffinen und/oder Verzögerung der Kristallisation von Paraffinen in einem flüssigen Erdölprodukt vorzugsweise einem Rohöl, das mindestens die folgenden Schritte umfasst:
- Herstellung einer Additivzusammensetzung gemäß einem der Ansprüche 1 bis 9, dann
- Eintragen der Additivzusammensetzung in das flüssige Erdölprodukt in einer solchen Menge, dass der Gesamtgehalt der beiden Verbindungen (1) und (2) im Bereich von 10 bis 2500 Gew.-ppm, vorzugsweise von 20 bis 1800 Gew.-ppm, vorzugsweise von 50 bis 1500 Gew.-ppm, vorzugsweise von 70 bis 1000 Gew.-ppm, vorzugsweise von 100 bis 800 Gew.-ppm, vorzugsweise von 400 bis 700 Gew.-ppm, weiter bevorzugt von 550 bis 650 Gew.-ppm, liegt.

## Claims

1. Additive composition comprising:
(1) at least one first compound selected from:
(i) copolymers of ethylene and vinyl acetate having a molar mass Mn in the range from 10 000 to 60 000 g.mol-1, optionally grafted with at least one alkyl (meth)acrylate group in which the alkyl chain is saturated and contains from 12 to 30 carbon atoms; and
(ii) polymers comprising at least 90 mol% of units derived from alkyl (meth)acrylate monomer in which the alkyl chain is saturated and contains from 18 to 22 carbon atoms;
(2) at least one second compound selected from modified alkylphenol-aldehyde resins;
said modified alkylphenol-aldehyde resins being obtainable by Mannich reaction of an alkylphenol-aldehyde condensation resin:
• with at least one aldehyde and/or ketone having from 1 to 8 carbon atoms, and
• at least one hydrocarbon compound comprising at least one alkylpolyamine group having between 1 and 30 carbon atoms,
said alkylphenol-aldehyde condensation resin being itself obtainable by condensation:
• of at least one alkylphenol substituted by at least one linear or branched alkyl group having from 1 to 30 carbon atoms, with
• at least one aldehyde and/or ketone having from 1 to 8 carbon atoms, and
wherein the mass ratio of the amount of the first compound (1) to the amount of the second compound (2) is in the range from 1 to 10.

2. Composition according to Claim 1, wherein the mass ratio of the amount of the first compound (1) to the amount of the second compound (2) is in the range from 1 to 6, more preferably from 1 to 5, and even better from 1.5 to 4.

3. Composition according to either of Claims 1 and 2, wherein the alkyl (meth)acrylate grafts of the polymers (i) comprise a saturated alkyl chain having from 14 to 26 carbon atoms, and preferably having from 18 to 22 carbon atoms.

4. Composition according to any one of Claims 1 to 3, wherein the polymers (ii) comprise at least 95 mol%, preferably at least 98 mol%, and better still 100 mol% of said units derived from alkyl (meth)acrylate monomer.

5. Composition according to any one of Claims 1 to 4, wherein said modified alkylphenol-aldehyde resins are obtainable by Mannich reaction of an alkylphenol-aldehyde condensation resin:
• with at least one aldehyde and/or ketone having from 1 to 4 carbon atoms, and
• at least one hydrocarbon compound comprising at least one alkylpolyamine group having between 4 and 30 carbon atoms,
said alkylphenol-aldehyde condensation resin being itself obtainable by condensation:
• of a monoalkylphenol with
• at least one aldehyde and/or ketone having from 1 to 4 carbon atoms.

6. Composition according to any one of the preceding claims, wherein the modified alkylphenol-aldehyde resins are obtainable from p-nonylphenol, formaldehyde and at least one hydrocarbon compound comprising at least one alkylpolyamine group.

7. Composition according to any one of the preceding claims, wherein the modified alkylphenol-aldehyde resins are obtainable from p-nonylphenol and the average number of phenolic rings per molecule of modified p-nonylphenolaldehyde resin is in the range from 6 to 25, preferably from 8 to 17, and even more preferably from 9 to 16.

8. Composition according to any one of the preceding claims, wherein the hydrocarbon compound having at least one alkylpolyamine group comprises at least two primary amine groups and a fatty chain having from 12 to 24 carbon atoms, preferably from 12 to 22 carbon atoms, and preferably said hydrocarbon compound is tallow dipropylenetriamine.

9. Composition according to any one of the preceding claims, **characterized in that** it further comprises an organic solvent, preferably selected from an aromatic solvent, such as xylene; a liquid hydrocarbon fraction such as a gas oil fraction; and mixtures of such solvents.

10. Use of the composition defined in any one of the preceding claims for reducing the dynamic viscosity of a liquid petroleum product, preferably at a temperature less than or equal to 30°C, more preferably less than or equal to 25°C, more preferably less than or equal to 20°C, more preferably less than or equal to 15°C, more preferably less than or equal to 10°C, more preferably less than or equal to 5°C, more preferably still less than or equal to 0°C, better still less than or equal to -5°C, and even better still less than or equal to -15°C.

11. Use of the composition defined in any one of Claims 1 to 9 for limiting paraffin aggregation phenomena, and/or for dispersing paraffins and/or retarding their crystallization in a liquid petroleum product.

12. Use of the composition defined in any one of Claims 1 to 9 for lowering the pour point of a liquid petroleum product.

13. Use of the composition defined in any one of Claims 1 to 9 for limiting the formation of paraffin deposits on the walls of a pipe for transporting a liquid petroleum product.

14. Use according to any one of Claims 10 to 13, wherein the liquid petroleum product is a gas oil, a crude oil or a heavy fuel oil, preferably a crude oil.

15. Use according to any one of Claims 10 to 14, wherein the modified alkylphenol-aldehyde resin is introduced into the additive composition in an amount of between 100 and 20 000 ppm by weight, preferably between 1000 and 15 000 ppm, preferably between 2000 and 12 000 ppm, preferably between 3000 and 10 000 ppm, preferably between 4000 and 5000 ppm by weight relative to the total weight of the composition.

16. Method for decreasing the viscosity of a liquid petroleum product and/or for limiting paraffin aggregation phenomena, and/or for dispersing paraffins and/or for retarding paraffin crystallization, in a liquid petroleum product, preferably a crude oil, comprising at least the following steps:
- the preparation of an additive composition as defined in any one of Claims 1 to 9, then
- the introduction of said additive composition into said liquid petroleum product in an amount such that the total content of the two compounds (1) and (2) is in the range from 10 to 2500 ppm by weight, preferably from 20 to 1800 ppm, preferably from 50 to 1500 ppm, preferably from 70 to 1000 ppm, preferably from 100 to 800 ppm, more preferably from 400 to 700 ppm, more preferably still from 550 to 650 ppm by weight.
